# EUROPÄISCHE PATENTANMELDUNG

(11) **EP 4 733 118 A1**
(43) Veröffentlichungstag der Anmeldung: **29.04.2026**
(21) Anmeldenummer: 25208717.6
(22) Anmeldetag: 14.10.2025
(51) Int. Cl.: B60L 3/00, B60K 6/20, B60L 50/16, B60W 20/40, B60W 30/184, B60W 30/192, F02N 11/04, B60K 6/48

(54) **VERFAHREN ZUM BETREIBEN EINES FAHRZEUGS, FAHRZEUG UND PROGRAMMPRODUKT**

(30) Priorität: 15.10.2024 DE 102024209967
(71) Anmelder: Volkswagen Aktiengesellschaft, 38440 Wolfsburg (DE)
(72) Erfinder: Enders, Timo, 38440 Wolfsburg (DE); Bippes, Michael, 38440 Wolfsburg (DE)

(57) **Zusammenfassung**

Die vorgestellte Erfindung betrifft ein Verfahren (100) zum Betreiben eines Fahrzeugs (200), das mindestens eine elektrische Maschine (201) und einen Verbrennungsmotor (203) umfasst, wobei das Verfahren (100) umfasst:
- Ermitteln (101) eines physikalischen Zustands eines Traktionsnetzwandlers (207), der die mindestens eine elektrische Maschine (201) mit elektrischem Strom aus einer Traktionsbatterie (205) versorgt,
- Zuordnen (103) des ermittelten physikalischen Zustands des Traktionsnetzwandlers (207) zu einem ersten logischen Zustand, in dem der physikalische Zustand des Traktionsnetzwandlers (207) es ermöglicht, durch den Traktionsnetzwandler (207) einen zum Versorgen der mindestens einen elektrischen Maschine (201) zusätzlichen Starterstrom zum Starten des Verbrennungsmotors (203) bereitzustellen oder zu einem zweiten logischen Zustand, in dem der physikalische Zustand des Traktionsnetzwandlers (207) es nicht ermöglicht, durch den Traktionsnetzwandler (207) einen zum Versorgen der mindestens einen elektrischen Maschine (201) zusätzlichen Starterstrom zum Starten des Verbrennungsmotors (203) bereitzustellen,
- Reduzieren (105) des durch den Traktionsnetzwandler (207) der mindestens einen elektrischen Maschine (201) maximal bereitstellbaren elektrischen Stroms für den Fall, dass der physikalische Zustand des Traktionswandlers (207) dem zweiten logischen Zustand zugeordnet wird, um eine Leistungsreserve für einen Start des Verbrennungsmotors (203) bereitzustellen.

## Beschreibung

Die vorgestellte Erfindung betrifft ein Verfahren zum Betreiben eines Fahrzeugs, ein Fahrzeug und ein Programmprodukt gemäß den beigefügten Ansprüchen.

In Fahrzeugen, die sowohl eine elektrische Maschine als auch einen Verbrennungsmotor zum Antreiben des Fahrzeugs aufweisen, wird elektrische Energie sowohl zum Bewegen des Fahrzeugs als auch zum Starten des Verbrennungsmotors benötigt. Entsprechend wird ein Traktionsnetzwandler, der elektrischen Strom aus einer Traktionsbatterie an die elektrische Maschine und einen Starter des Verbrennungsmotors überträgt, beim Start des Verbrennungsmotors besonders stark belastet. Dazu kann der Traktionsnetzwandler, wenn sein physikalischer Zustand, insbesondere seine Temperatur dies zulässt, in einen Betriebsmodus mit sogenannten "erweiterten Grenzen" geschaltet und für kurze Zeit besonders stark belastet werden.

In physikalischen Zuständen, in denen der Traktionsnetzwandler bspw. durch einen dynamischen Fahrbetrieb und/oder hohe Umgebungstemperaturen stark belastet wird, kann der Traktionsnetzwandler nicht in den Betriebsmodus mit erweiterten Grenzen geschaltet werden, da dieser sonst Schaden nehmen könnte.

Die DE 10 2021 111 693 A1 beschreibt ein Verfahren, bei dem einem Fahrer eine Verfügbarkeit eines Betriebsmodus eines Traktionsnetzwandlers mit erhöhter Leistung auf einer Anzeige dargestellt wird.

Die DE 10 2010 007 634 A1 beschreibt ein Verfahren, bei dem, wenn ein Fahrer ein entsprechendes Bedienelement betätigt, durch eine Elektromaschine zusätzliches Drehmoment auf eine von einer Brennkraftmaschine angetriebene Achse übertragen wird.

Die US 2018/0208178 A1 beschreibt ein System zum Steuern eines Hybridfahrzeugs, das das Fahrzeug zwischen einem ersten Zustand, bei dem eine Verbindung eines Verbrennungsmotors des Fahrzeugs zu einem Antriebsstrang des Fahrzeugs besteht, und einem zweiten Zustand, bei dem die Verbindung des Verbrennungsmotors zu dem Antriebsstrang nicht besteht, umschaltet.

Vor diesem Hintergrund ist es eine Aufgabe der vorgestellten Erfindung, eine Möglichkeit zum robusten Betrieb eines Fahrzeugs, das durch einen Verbrennungsmotor und eine elektrische Maschine angetrieben werden kann, bereitzustellen.

Es wird somit gemäß einem ersten Aspekt der vorgestellten Erfindung ein Verfahren zum robusten Betrieb eines Fahrzeugs, das mindestens eine elektrische Maschine und einen Verbrennungsmotor umfasst, vorgestellt.

Das vorgestellte Verfahren umfasst das Ermitteln eines physikalischen Zustands eines Traktionsnetzwandlers, der die mindestens eine elektrische Maschine mit elektrischem Strom aus einer Traktionsbatterie versorgt, das Zuordnen des ermittelten physikalischen Zustands des Traktionsnetzwandlers zu einem ersten logischen Zustand, in dem der Zustand des Traktionsnetzwandlers es ermöglicht, durch den Traktionsnetzwandler einen zum Versorgen der mindestens einen elektrischen Maschine zusätzlichen Starterstrom zum Starten des Verbrennungsmotors bereitzustellen oder zu einem zweiten logischen Zustand, in dem der Zustand des Traktionsnetzwandlers es nicht ermöglicht, durch den Traktionsnetzwandler einen zum Versorgen der mindestens einen elektrischen Maschine zusätzlichen Starterstrom zum Starten des Verbrennungsmotors bereitzustellen, und das Reduzieren des durch den Traktionsnetzwandler der mindestens einen elektrischen Maschine maximalen bereitstellbaren elektrischen Stroms für den Fall, dass der physikalische Zustand des Traktionswandlers dem zweiten logischen Zustand zugeordnet wird, um eine Leistungsreserve für einen Start des Verbrennungsmotors bereitzustellen.

Das vorgestellte Verfahren basiert darauf, dass ein von dem Traktionsnetzwandler bereitstellbarer Maximalstrom bzw. eine entsprechende Maximalleistung dynamisch in Abhängigkeit eines physikalischen Zustands des Traktionsnetzwandlers, insbesondere dessen Temperatur, eingestellt wird. Entsprechend wird der Traktionsnetzwandler vor einer Überlastung und dadurch bedingten Schäden geschützt und ein robuster Betrieb des Fahrzeugs ermöglicht.

Zum Ermitteln des Zustands des Traktionsnetzwandlers kann dieser mittels eines Sensors, wie bspw. eines Temperatursensors, gemessen und/oder mittels eines mathematischen Modells berechnet werden.

Zum Verhindern einer Überlastung des Traktionsnetzwandlers wird dieser für den Fall, dass der physikalische Zustand des Traktionswandlers dem zweiten logischen Zustand zugeordnet wird, ein von dem Traktionsnetzwandler bereitstellbarer Maximalstrom und/oder Maximalleistung reduziert, d. h., bspw. gegenüber einem Standardwert um einen vorgegebenen Betrag oder einen in Abhängigkeit des physikalischen Zustands gewählten Betrags reduziert.

Es kann vorgesehen sein, dass der dem physikalischen Zustand zugeordnete logische Zustand als Schaltsignal ausgegeben wird und in Abhängigkeit des Schaltsignals der Traktionsnetzwandler zwischen einem ersten Betriebsmodus und einem zweiten Betriebsmodus umgeschaltet wird, wobei in dem ersten Betriebsmodus der Traktionsnetzwandler dazu konfiguriert ist, einen Standardmaximalstrom und einen Starterstrom zusätzlich zu dem Standardmaximalstrom bereitzustellen, und wobei in dem zweiten Betriebsmodus der Traktionsnetzwandler dazu konfiguriert ist, einen Reduktionsmaximalstrom und einen Starterstrom zusätzlich zu dem Reduktionsmaximalstrom bereitzustellen, wobei der Reduktionsmaximalstrom geringer ist als der Standardmaximalstrom.

Ein Schaltsignal kann bspw. ein sogenanntes "Flaggensignal" oder ein Rampensignal sein, das den ersten Zustand von dem zweiten Zustand unterscheidet.

Das Schaltsignal kann bspw. von einer das Verfahren ausführenden Recheneinheit bereitgestellt werden und insbesondere an ein Steuergerät bzw. eine Steuerungsfunktion des Traktionsnetzwandlers übermittelt werden.

Es kann vorgesehen sein, dass das Schaltsignal ein Schaltbit umfasst.

Ein Schaltbit ist ein Bit in einem Byte, das in seinen verschiedenen binären Zuständen den ersten logischen Zustand oder den zweiten logischen Zustand anzeigt, sodass der durch den Traktionsnetzwandler bereitzustellende Maximalstrom bzw. Maximalleistung entsprechend dem Schaltbit eingestellt werden kann.

Es kann weiterhin vorgesehen sein, dass ein Betrag, um den der durch den Traktionsnetzwandler der mindestens einen elektrischen Maschine bereitgestellte elektrische Strom, bzw. Leistung reduziert wird, in Abhängigkeit einer Temperatur des Traktionsnetzwandlers gewählt wird.

Durch eine relative Begrenzung, d. h., eine Begrenzung des Maximal durch den Traktionsnetzwandler bereitstellbaren elektrischen Stroms in Relation zur Temperatur des Traktionsnetzwandlers wird bei einer geringen thermischen Belastung des Traktionsnetzwandlers eine unnötig starke Beschränkung des Maximalstroms, bzw. Maximalleistung verhindert und potentielle Leistung des Fahrzeugs so lange wie möglich maximiert.

Es kann weiterhin vorgesehen sein, dass anhand des ermittelten physikalischen Zustands des Traktionsnetzwandlers ein Kennwert ermittelt wird, der einen in dem ermittelten physikalischen Zustand durch den Traktionsnetzwandler zum Versorgen der mindestens einen elektrischen Maschine zusätzlichen maximalen Starterstrom quantifiziert, wobei der Kennwert auf einer Ausgabeeinheit ausgegeben wird.

Ein Kennwert, der einen in dem ermittelten physikalischen Zustand durch den Traktionsnetzwandler zum Versorgen der mindestens einen elektrischen Maschine zusätzlichen maximalen Starterstrom quantifiziert, kann einem Fahrer des Fahrzeugs Auskunft darüber geben, ob und ggf. wann eine Maximalleistung des Fahrzeugs verfügbar ist. Entsprechend kann der Fahrer seinen Fahrstil in Abhängigkeit des Kennwerts anpassen.

Es kann weiterhin vorgesehen sein, dass zum Ermitteln des physikalischen Zustands des Traktionsnetzwandlers eine Temperatur des Traktionsnetzwandlers ermittelt wird und zum Zuordnen des physikalischen Zustands zu einem jeweiligen logischen Zustand die ermittelte Temperatur des Traktionsnetzwandlers mit einem Schwellenwert abgeglichen wird und für den Fall, dass die ermittelte Temperatur des Traktionsnetzwandlers größer oder gleich dem Schwellenwert ist, der physikalische Zustand des Traktionsnetzwandlers dem zweiten logischen Zustand zugeordnet wird.

Mittels eines vorgegebenen Schwellenwerts kann eine Belastungsgrenze des Traktionsnetzwandlers definiert werden, bis zu der der Traktionsnetzwandler mit einem Zusatzstrom belastet werden kann.

Es kann weiterhin vorgesehen sein, dass das Verfahren in Reaktion auf einen Startbefehl zum Starten des Verbrennungsmotors ausgeführt wird.

Um eine unnötige Beschränkung eines von dem Traktionsnetzwandler bereitstellbaren Maximalstroms zu verhindern, kann das Verfahren lediglich bedarfsweise, d. h. in Reaktion auf einen Startbefehl, zum Starten des Verbrennungsmotors ausgeführt werden.

Es kann weiterhin vorgesehen sein, dass der ermittelte physikalische Zustand und/oder der ermittelte logische Zustand des Traktionsnetzwandlers an mindestens ein Steuergerät zum Steuern der mindestens einen durch den Traktionsnetzwandler mit elektrischem Strom versorgten elektrischen Maschine übermittelt wird, wobei das Steuergerät eine Leistung der mindestens einen elektrischen Maschine in Abhängigkeit des übermittelten physikalischen Zustands und/oder logischen Zustands eine Maximalleistung der elektrischen Maschine einstellt.

Durch ein Bereitstellen des ermittelten physikalischen Zustands und/oder des ermittelten logischen Zustands des Traktionsnetzwandlers an mindestens ein Steuergerät kann das Verfahren auf einer von dem Steuergerät separaten Recheneinheit, wie bspw. einem Zentralsteuergerät oder einen Cloud-Server ausgeführt werden.

Gemäß einem zweiten Aspekt betrifft die vorgestellte Erfindung ein Fahrzeug.

Das vorgestellte Fahrzeug umfasst mindestens eine elektrische Maschine, einen Verbrennungsmotor, eine Traktionsbatterie, einen Traktionsnetzwandler und eine Recheneinheit, wobei die Recheneinheit dazu konfiguriert ist, ein Verfahren nach einem der voranstehenden auszuführen, um die mindestens eine elektrische Maschine mittels des Traktionsnetzwandlers mit elektrischem Strom aus der Traktionsbatterie zu versorgen und den Verbrennungsmotor zu starten.

Aufgrund des vorgestellten Verfahrens ist das vorgestellte Fahrzeug besonders robust gegenüber Ausfällen des Traktionsnetzwandlers.

Gemäß einem dritten Aspekt betrifft die vorgestellte Erfindung ein Programmprodukt, wobei das Programmprodukt Programmcodemittel umfasst, die, wenn diese auf einer Recheneinheit ausgeführt werden, die Recheneinheit dazu konfigurieren, eine mögliche Ausgestaltung des vorgestellten Verfahrens durchzuführen.

Unter einer Recheneinheit ist im Kontext der vorgestellten Erfindung ein Computer, insbesondere ein Cloud-Computer, ein Prozessor, ein Steuergerät oder jeder weitere programmierbare Schaltkreis zu verstehen.

Vorteile, die ausführlich zu dem Verfahren zum robusten Betrieb eines Fahrzeugs gemäß dem ersten Aspekt der Erfindung beschrieben werden, gelten gleichermaßen bei dem Fahrzeug gemäß dem zweiten Aspekt der Erfindung sowie bei dem Programmprodukt gemäß dem dritten Aspekt der Erfindung und umgekehrt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen jeweils schematisch:
- Figur 1: eine mögliche Ausgestaltung des vorgestellten Verfahrens,
- Figur 2: eine Detaildarstellung des Verfahrens gemäß Fig. 1, und
- Figur 3: eine mögliche Ausgestaltung des vorgestellten Fahrzeugs.

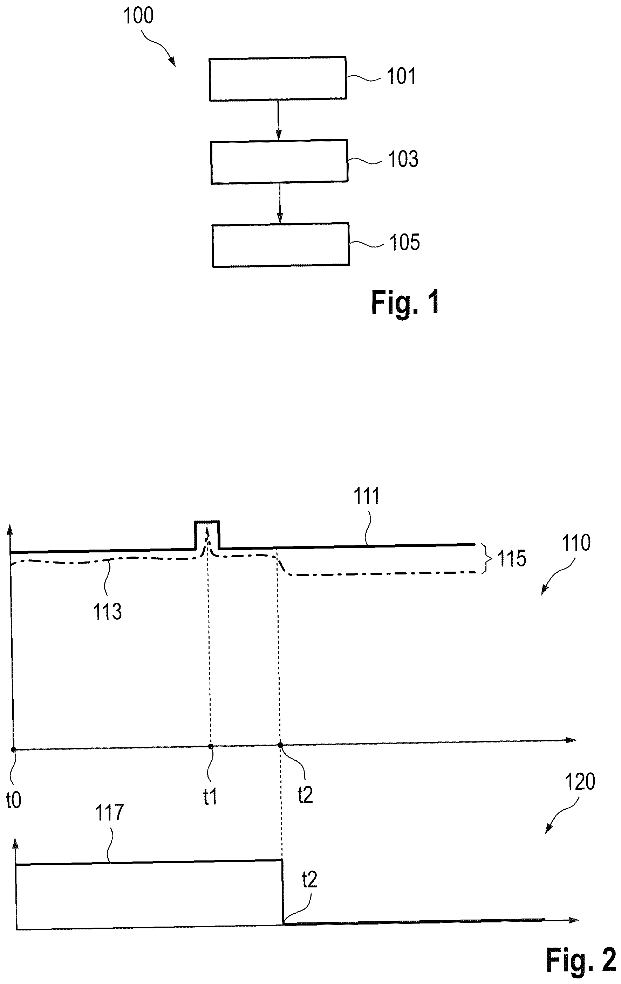

In Fig. 1 ist ein Verfahren 100 zum Betreiben eines Fahrzeugs 200, das mindestens eine elektrische Maschine 201 und einen Verbrennungsmotor 203 umfasst.

Das Verfahren 100 umfasst einen Ermittlungsschritt 101, bei dem ein physikalischer Zustand eines Traktionsnetzwandlers 207, der die mindestens eine elektrische Maschine 201 mit elektrischem Strom aus einer Traktionsbatterie 205 versorgt, ermittelt, insbesondere gemessen wird.

Weiterhin umfasst das Verfahren 100 einen Zuordnungsschritt 103, bei dem dem ermittelten physikalischen Zustand des Traktionsnetzwandlers 207 ein erster logischer Zustand zugeordnet wird, in dem der Zustand des Traktionsnetzwandlers 207 es ermöglicht, durch den Traktionsnetzwandler 207 einen zum Versorgen der mindestens einen elektrischen Maschine 201 zusätzlichen Starterstrom zum Starten des Verbrennungsmotors 203 bereitzustellen oder zu einem zweiten logischen Zustand zugeordnet wird, in dem der Zustand des Traktionsnetzwandlers 207 es nicht ermöglicht, durch den Traktionsnetzwandler 207 einen zum Versorgen der mindestens einen elektrischen Maschine 201 zusätzlichen Starterstrom zum Starten des Verbrennungsmotors 203 bereitzustellen.

Weiterhin umfasst das Verfahren 100 einen Reduktionsschritt 105, bei dem ein durch den Traktionsnetzwandler 207 der mindestens einen elektrischen Maschine 201 maximal bereitstellbarer elektrischer Strom für den Fall reduziert wird, dass der physikalische Zustand des Traktionswandlers 207 dem zweiten logischen Zustand zugeordnet wird, um eine Leistungsreserve für einen Start des Verbrennungsmotors 203 bereitzustellen.

In Fig. 2 ist ein erstes Diagramm 110 dargestellt, das sich auf seiner Abszisse über die Zeit und auf seiner Ordinate über einen von dem Traktionsnetzwandler 207 maximal bereitstellbaren elektrischen Strom, bzw. Leistung aufspannt.

Ein erster Verlauf 111 entspricht dem maximalen Grenzwert des Traktionsnetzwandlers 207.

Ausgehend von einem Zeitpunkt t0 wird ein maximal durch den Traktionsnetzwandler 207 bereitstellbarer elektrischer Strom, bzw. Leistung auf einem Standardwert gehalten. Zu einem Zeitpunkt t1, zu dem der Verbrennungsmotor 203 gestartet werden soll, wird durch den Traktionsnetzwandler 207 ein Zusatzstrom bereitgestellt, indem dessen Betreibgrenzen kurzzeitig erweitert werden.

Ein zweiter Verlauf 113 entspricht einem Betrieb des Traktionsnetzwandlers 207, bei dem dieser ab dem Zeitpunkt t2 übermäßig belastet ist und dann seinem zweiten logischen Zustand zugeordnet wird.

Ausgehend von einem Zeitpunkt t0 wird ein maximal durch den Traktionsnetzwandler 207 bereitstellbarer elektrischer Strom zum Betrieb der elektrischen Maschine 201 bereitgestellt. Zu einem Zeitpunkt t1, zu dem der Verbrennungsmotor 203 gestartet werden soll, wird durch den Traktionsnetzwandler 207 ein Zusatzstrom bereitgestellt, indem dessen Betreibgrenzen kurzzeitig erweitert werden, was zulässig ist, da sich der Traktionsnetzwandler 207 zum Zeitpunkt t1 in einem physikalischen Zustand befindet, der dem ersten logischen Zustand zugeordnet ist.

Zum Zeitpunkt t2 ist der Traktionsnetzwandler 207 derart thermisch belastet, dass dieser sich in einem physikalischen Zustand befindet, der dem zweiten logischen Zustand zugeordnet ist. Um eine Beschädigung des Traktionsnetzwandlers 207 durch einen erneuten Widerstart nach dem Zeitpunkt t2 zu verhindern, wird der durch den Traktionsnetzwandler 207 bereitstellbare elektrische Strom, bzw. Leistung zum Zeitpunkt t2 begrenzt, sodass eine Wiederstartreserve vorgehalten wird, wie durch die Klammer 115 angedeutet.

Die Wiederstartreserve bzw. die Begrenzung des durch den Traktionsnetzwandler 207 bereitstellbaren elektrischen Stroms ist dabei so groß, dass eine Belastung durch den Zusatzstrom zum Starten des Verbrennungsmotors 203 in Summe mit einem zum Versorgen der elektrischen Maschine 201 maximal bereitstellbaren elektrischen Strom unter den Betriebsgrenzen des Traktionsnetzwandlers 207, insbesondere unter dem Standardwert liegt.

Weiterhin ist in Fig. 2 ein Diagramm 120 dargestellt, das sich auf seiner Abszisse über die Zeit und auf seiner Ordinate über einen logischen Zustand aufspannt.

Ein Verlauf 117 gibt einen logischen Zustand des Traktionsnetzwandlers 207 an. Während einer ersten Betriebsphase bis zum Zeitpunkt t2 wird der Traktionsnetzwandler 207 wenig thermisch belastet, sodass dieser dem ersten logischen Zustand zugeordnet wird. Zum Zeitpunkt t2 hat sich der Traktionsnetzwandler 207 derart erwärmt, dass dieser dem zweiten logischen Zustand zugeordnet wird, sodass der zweite Verlauf 113 zu diesem Zeitpunkt t2 reduziert wird.

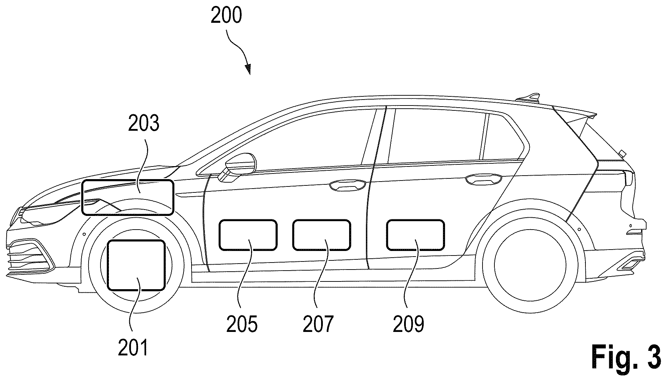

In Fig. 3 ist ein Fahrzeug 200 dargestellt. Das Fahrzeug 200 umfasst eine elektrische Maschine 201, einen Verbrennungsmotor 203, eine Traktionsbatterie 205, einen Traktionsnetzwandler 207 und eine Recheneinheit 209, wobei die Recheneinheit 209 dazu konfiguriert ist, das Verfahren 100 gemäß Fig. 1 auszuführen, um die mindestens eine elektrische Maschine 201 mittels des Traktionsnetzwandlers 207 mit elektrischem Strom aus der Traktionsbatterie 205 zu versorgen und den Verbrennungsmotor 203 zu starten.

### Bezugszeichenliste

- 100: Verfahren
- 101: Ermittlungsschritt
- 103: Zuordnungsschritt
- 105: Reduktionsschritt
- 110: erstes Diagramm
- 111: erster Verlauf
- 113: zweiter Verlauf
- 115: Klammer
- 117: Verlauf
- 200: Fahrzeug
- 201: elektrische Maschine
- 203: Verbrennungsmotor
- 205: Traktionsbatterie
- 207: Traktionsnetzwandler
- 209: Recheneinheit

## Patentansprüche

1. Verfahren (100) zum Betreiben eines Fahrzeugs (200), das mindestens eine elektrische Maschine (201) und einen Verbrennungsmotor (203) umfasst,
wobei das Verfahren (100) umfasst:
- Ermitteln (101) eines physikalischen Zustands eines Traktionsnetzwandlers (207), der die mindestens eine elektrische Maschine (201) mit elektrischem Strom aus einer Traktionsbatterie (205) versorgt,
- Zuordnen (103) des ermittelten physikalischen Zustands des Traktionsnetzwandlers (207) zu einem ersten logischen Zustand, in dem der physikalische Zustand des Traktionsnetzwandlers (207) es ermöglicht, durch den Traktionsnetzwandler (207) einen zum Versorgen der mindestens einen elektrischen Maschine (201) zusätzlichen Starterstrom zum Starten des Verbrennungsmotors (203) bereitzustellen oder zu einem zweiten logischen Zustand, in dem der physikalische Zustand des Traktionsnetzwandlers (207) es nicht ermöglicht, durch den Traktionsnetzwandler (207) einen zum Versorgen der mindestens einen elektrischen Maschine (201) zusätzlichen Starterstrom zum Starten des Verbrennungsmotors (203) bereitzustellen,
- Reduzieren (105) des durch den Traktionsnetzwandler (207) der mindestens einen elektrischen Maschine (201) maximal bereitstellbaren elektrischen Stroms für den Fall, dass der physikalische Zustand des Traktionswandlers (207) dem zweiten logischen Zustand zugeordnet wird, um eine Leistungsreserve für einen Start des Verbrennungsmotors (203) bereitzustellen.

2. Verfahren (100) nach Anspruch 1,
**dadurch gekennzeichnet,**
**dass** der dem physikalischen Zustand zugeordnete logische Zustand als Schaltsignal ausgegeben wird und in Abhängigkeit des Schaltsignals der Traktionsnetzwandler (207) zwischen einem ersten Betriebsmodus und einem zweiten Betriebsmodus umgeschaltet wird,
wobei in dem ersten Betriebsmodus der Traktionsnetzwandler (207) dazu konfiguriert ist, einen Standardmaximalstrom und einen Starterstrom zusätzlich zu dem Standardmaximalstrom bereitzustellen, und
wobei in dem zweiten Betriebsmodus der Traktionsnetzwandler (207) dazu konfiguriert ist, einen Reduktionsmaximalstrom und einen Starterstrom zusätzlich zu dem Reduktionsmaximalstrom bereitzustellen,
wobei der Reduktionsmaximalstrom geringer ist als der Standardmaximalstrom.

3. Verfahren (100) nach Anspruch 2,
**dadurch gekennzeichnet,**
**dass** das Schaltsignal ein Schaltbit umfasst.

4. Verfahren (100) nach einem der voranstehenden Ansprüche,
**dadurch gekennzeichnet,**
**dass** ein Betrag, um den der durch den Traktionsnetzwandler (207) der mindestens einen elektrischen Maschine (201) bereitgestellte elektrische Strom reduziert wird, in Abhängigkeit einer Temperatur des Traktionsnetzwandlers (207) gewählt wird.

5. Verfahren (100) nach einem der voranstehenden Ansprüche,
**dadurch gekennzeichnet,**
**dass** anhand des ermittelten physikalischen Zustands des Traktionsnetzwandlers (207) ein Kennwert ermittelt wird, der einen in dem ermittelten physikalischen Zustand durch den Traktionsnetzwandler (207) zum Versorgen der mindestens einen elektrischen Maschine (201) zusätzlichen maximalen Starterstrom quantifiziert,
wobei der Kennwert auf einer Ausgabeeinheit ausgegeben wird.

6. Verfahren (100) nach einem der voranstehenden Ansprüche,
**dadurch gekennzeichnet,**
**dass** zum Ermitteln des physikalischen Zustands des Traktionsnetzwandlers (207) eine Temperatur des Traktionsnetzwandlers (207) ermittelt wird und zum Zuordnen (103) des physikalischen Zustands zu einem jeweiligen logischen Zustand die ermittelte Temperatur des Traktionsnetzwandlers (207) mit einem Schwellenwert abgeglichen wird und für den Fall, dass die ermittelte Temperatur des Traktionsnetzwandlers (207) größer oder gleich dem Schwellenwert ist, der physikalische Zustand des Traktionsnetzwandlers (207) dem zweiten logischen Zustand zugeordnet wird.

7. Verfahren (100) nach einem der voranstehenden Ansprüche,
**dadurch gekennzeichnet,**
**dass** das Verfahren (100) in Reaktion auf einen Startbefehl zum Starten des Verbrennungsmotors (203) ausgeführt wird.

8. Verfahren (100) nach einem der voranstehenden Ansprüche,
**dadurch gekennzeichnet,**
**dass** der ermittelte physikalische Zustand und/oder der ermittelte logische Zustand des Traktionsnetzwandlers (207) an mindestens ein Steuergerät zum Steuern der mindestens einen durch den Traktionsnetzwandler (207) mit elektrischem Strom versorgten elektrischen Maschine (201) übermittelt wird,
wobei das Steuergerät eine Leistung der mindestens einen elektrischen Maschine (201) in Abhängigkeit des übermittelten physikalischen Zustands und/oder logischen Zustands eine Maximalleistung der elektrischen Maschine (201) einstellt.

9. Fahrzeug (200),
wobei das Fahrzeug (200) umfasst:
- mindestens eine elektrische Maschine (201),
- einen Verbrennungsmotor (203),
- eine Traktionsbatterie (205),
- einen Traktionsnetzwandler (207),
- eine Recheneinheit (209),
wobei die Recheneinheit (209) dazu konfiguriert ist, ein Verfahren (100) nach einem der voranstehenden auszuführen, um die mindestens eine elektrische Maschine (201) mittels des Traktionsnetzwandlers (207) mit elektrischem Strom aus der Traktionsbatterie (205) zu versorgen und den Verbrennungsmotor (203) zu starten.

10. Programmprodukt,
wobei das Programmprodukt Programmcodemittel umfasst, die, wenn diese auf einer Recheneinheit (209) ausgeführt werden, die Recheneinheit (209) dazu konfigurieren, ein Verfahren (100) nach einem der Ansprüche 1 bis 8 durchzuführen.
